**Europäisches Patentamt**

**European Patent Office**

**Office européen des brevets**

(19)

(11) Veröffentlichungsnummer: **0 027 531**
**B1**

(12) # EUROPÄISCHE PATENTSCHRIFT

(45) Veröffentlichungstag der Patentschrift:
**23.03.83**

(51) Int. Cl.³: **B 62 D 43/02,** B 60 R 9/04

(21) Anmeldenummer: **80105337.2**

(22) Anmeldetag: **06.09.80**

(54) **Dachgepäckträger, insbesondere für geländegängige Pkw, Krankenfahrzeuge od. dgl.**

(30) Priorität: **16.10.79 DE 7929282 U**

(43) Veröffentlichungstag der Anmeldung:
**29.04.81 Patentblatt 81/17**

(45) Bekanntmachung des Hinweises auf die Patenterteilung:
**23.03.83 Patentblatt 83/12**

(84) Benannte Vertragsstaaten:
**AT FR GB IT**

(56) Entgegenhaltungen:
**DE-C-486 676**
**FR-A-986 618**
**FR-A-994 573**
**US-A-2 991 894**
**US-A-3 823 839**
**US-A-3 878 955**
**US-A-4 039 096**
**US-A-4 174 119**

(73) Patentinhaber: **Binz GmbH & Co, Postfach 1120,
Zollstrasse 2 D-7073 Lorch (DE)**

(72) Erfinder: **Lehmann, Ludwig J.C., Haldenbergstrasse 65,
D-7073 Lorch (DE)**

(74) Vertreter: **Grämkow, Werner, Dipl.-Ing. et al,
Patentanwälte Dipl.-Ing. Grämkow Dipl.-Phys. Dr. Manitz
Dipl.-Ing. Finsterwald Dipl.-Chem. Dr. Heyn Dipl.-Phys.
Rotermund B.Sc.(Phys.) Morgan Seelbergstrasse 23/25,
D-7000 Stuttgart 50 (DE)**

Dachgepäckträger, insbesondere für geländegängige Pkw,
Krankenfahrzeuge od. dgl.

Die Erfindung betrifft einen Dachgepäckträger mit einem auf einem Fahrzeug befestigbaren Rahmen und daran gehaltertem, an einer Rahmenseite aus einer Transportstellung in eine Beladestellung herabschwenkbarem Lasttrageteil, welches seitlich seines Schwerpunktes mittels bezüglich des Lasttrageteiles ortsfester Gelenke mit parallel zur genannten Rahmenseite verlaufender Kippachse an einem am Rahmen quer zur Kippachse verschiebbar angeordneten Führungsteil angelenkt ist.

Ein derartiger Dachgepäckträger ist aus der US-A-4 039 096 bekannt und dient zum Transport eines zusammenklappbaren Krankenfahrstuhles, um gehunfähigen Personen die Benutzung eines Kraftfahrzeuges zu gestatten. Dabei kann das den Krankenfahrstuhl aufnehmende Lasttrageteil mittels entsprechender motorbetriebener Vorrichtungen seitlich an einer Fahrzeugtür herabgelassen bzw. auf das Fahrzeugdach angehoben werden.

Ein ähnlicher Dachgepäckträger, ebenfalls zur Aufnahme eines zusammenklappbaren Krankenfahrstuhles, ist aus der US-A-3 823 839 bekannt.

Diese bekannten Dachgepäckträger sind im Hinblick auf ihren Verwendungszweck außerordentlich aufwendig konstruiert, zumal das Lasttrageteil zwischen seiner Transportstellung und seiner Beladestellung auch eine Schwenkbewegung ausführen muß, ohne die Fahrzeugseitenwände zu berühren oder gar zu beschädigen. Gleichwohl kann eine Beschädigung nicht völlig ausgeschlossen werden.

Aus der FR-A-994 573 ist ein Dachgepäckträger zur Aufnahme von Koffern od. dgl. bekannt, welcher eine geländerartige Umfassung der gitterförmigen Ladefläche aufweist, um das auf der Ladefläche liegende Transportgut gegen Herabfallen zu schützen. Zur Erleichterung der Beladung dieses Dachgepäckträgers können Teile der geländerartigen Umfassung herabgeklappt werden, so daß das Transportgut beim Beladen des Dachgepäckträgers nur bis in die Höhe der Ladefläche angehoben werden muß. Im übrigen sind die herabklappbaren Teile der Umfassung an teleskopierbaren Elementen der gitterförmigen Ladefläche angeordnet, um die Abmessungen des Dachgepäckträgers unterschiedlichen Größen des Ladegutes anpassen zu können.

Aufgabe der Erfindung ist es, einen auch bei größerer Fahrzeughöhe leicht beladbaren Dachgepäckträger mit herabschwenkbarem Lasttrageteil und besonders einfacher, jedoch stabiler Konstruktion zu schaffen.

Die Lösung dieser Aufgabe ist im wesentlichen dadurch gekennzeichnet, daß Träger des Rahmens als Führungen für einen als Führungsteil angeordneten Schlitten ausgebildet sind, und daß das Lasttrageteil auf der Seite seines Schwerpunktes auf mindestens einer rahmenfesten Gleitführung abgestützt ist, die in Verschieberichtung des Lasttrageteiles um die Fahrzeugdachkante, zumindest teilweise, herumgeführt ist, so daß das Lasttrageteil bei Verschiebung um seine Kippachse schwenkt.

Der erfindungsgemäße Dachgepäckträger ist zur Aufnahme eines Reserverades, insbesondere bei geländegängigen Krankenfahrzeugen, besonders geeignet, da einerseits eine Anordnung auf dem Fahrzeugdach, beispielsweise an der Dachrinne, in einfacher Weise mittels Klemmvorrichtungen od. dgl. ohne Änderungen am Fahrzeug möglich ist.

Andererseits ist die Unterbringung des Reserverades auf dem Dach bei geländegängigen Krankenfahrzeugen besonders zweckmäßig, da das Reserverad aus hygienischen Gründen nicht im Innenraum untergebracht sein sollte und eine Halterung des Rades außen an der Heckwand die dort im allgemeinen vorgesehene große Hecktür unerwünscht belasten und Verstärkungen der Türgelenke notwendig machen würde. Eine Anordnung des Reserverades an den Fahrzeugseitenwänden ist wegen der damit verbundenen Gefährdung der übrigen Verkehrsteilnehmer unerwünscht. Die Unterbringung des Reserverades unter dem Fahrzeugboden verbietet sich, da die Bodenfreiheit vermindert würde.

Aufgrund der erfindungsgemäß vorgesehenen Gleitführungen wird das Lasttrageteil in allen möglichen Zwischenstellungen zwischen Transport- und Beladestellung abgestützt und vom Fahrzeugdach ferngehalten. Dadurch ist auch ein schnelles Be- und Entladen des Dachgepäckträgers jederzeit möglich.

Zur einfachen Handhabbarkeit des erfindungsgemäßen Dachgepäckträgers trägt der Schlitten bei, welcher eine Verkantung des Lasttrageteiles gegenüber den Führungen verhindert, so daß das Lasttrageteil immer leicht bewegbar bleibt. Gemäß einer bevorzugten Ausführungsform der Erfindung sind zwischen dem Schlitten und dem Rahmen des Dachgepäckträgers Rückzugfedern derart eingespannt, daß das Lasttrageteil gegen die Kraft dieser Federn herabgeschwenkt werden kann. Somit läßt sich das Lasttrageteil leichter in die Transportstellung schieben, so daß die Handhabung noch weiter vereinfacht wird.

Dabei ist im Hinblick auf jederzeitige Gebrauchsfähigkeit vorteilhaft, daß keinerlei motorischer Antrieb notwendig ist.

Am in Beladestellung unteren Rand des Lasttrageteiles können Aufsetzstützen od. dgl. angeordnet sein, die die Last bei herabgeschwenktem Lasttrageteil abstützen und damit das Be- und Entladen noch weiter erleichtern.

Als Führungen für den Schlitten des Lasttrageteiles dienen vorzugsweise U-förmige Profilteile mit U-förmiger Nut, in die am Schlitten angeordnete Führungselemente, insbesondere Führungsrollen, eingreifen.

Zur Begrenzung der Verschiebbarkeit des Schlittens können an den Führungen Anschläge angeordnet sein, beispielsweise indem die U-förmigen Profilteile an ihren Stirnenden Anschlußteile aufweisen.

Nachfolgend wird ein besonders bevorzugtes Ausführungsbeispiel der Erfindung, und zwar ein Reserveradhalter, anhand der Zeichnung erläutert. Dabei zeigt

Fig. 1 eine Frontansicht eines geländegängigen Pkw, wobei sich das Lasttrageteil des Dachgepäckträgers in Transportstellung befindet,

Fig. 2 eine entsprechende Frontansicht, wobei das Lasttrageteil in Beladestellung ist,

Fig. 3 eine Seitenansicht des Dachgepäckträgers entsprechend dem Pfeil III in Fig. 2,

Fig. 4 ein Schnittbild des Dachgepäckträgers entsprechend der Schnittlinie IV-IV in Fig. 3 und

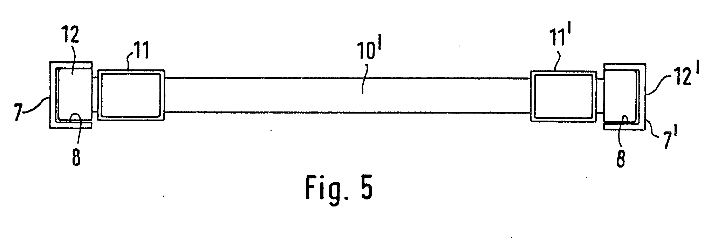

Fig. 5 ein Schnittbild des Dachgepäckträgers entsprechend der Schnittlinie V-V in Fig. 4.

Der insgesamt mit 1 bezeichnete Gepäckträger dient zur Halterung eines Reserverades 2 und ist in an sich bekannter Weise mit Stützen 3 an der Regenrinne 4 des Fahrzeugdaches 5 eines Fahrzeugs befestigt. Dazu sind die Stützen 3 in die Fahrzeugrinne 4 eingesetzt und mittels Winkelstücke 6, deren einer Schenkel mit den Stützen verschraubt ist und deren anderer Schenkel die Regenrinne 4 untergreift, form- und kraftschlüssig an der Regenrinne 4 verankert.

Der Dachgepäckträger 1 besitzt zwei als Querführungen 7, 7' dienende Querträger, welche quer zur Fahrzeuglängsrichtung in einem Abstand über das Fahrzeugdach geführt sind und über nicht dargestellte Längsstreben und/oder Diagonalstreben in Form eines verwindungssteifen Rahmens miteinander verbunden sein können. Die Querführungen 7, 7' sind als U-förmige Profilteile mit U-förmiger Nut 8 ausgebildet.

In diesen Nuten 8 ist ein Schlitten 9 verschiebbar geführt, welcher aus Längsholmen 10, 10' und Querholmen 11, 11' besteht, an denen Führungsrollen 12, 12' angeordnet sind, die in die Nuten 8 der Querführungen 7, 7' eingreifen.

An ihren stirnseitigen Enden besitzen die U-förmigen Nuten 8 nicht dargestellte Anschläge, gegen die die Führungsrollen 12 stoßen, so daß der Schlitten 9 nicht aus den Führungen 7, 7' herausfallen kann.

Auf einer Seite des Schlittens 9 ist an den Querholmen 11, 11' ein Lasttrageteil 13 mittels Gelenk 14 um eine parallel zur Fahrzeuglängsachse verlaufende Kippachse schwenkbar gelagert. Dieses Lasttrageteil 13 besteht aus den Trägerholmen 15, 15', die mit Querstreben 16 einen rechteckförmigen Rahmen bilden.

Das Lasttrageteil 13 liegt seitlich seiner durch die Gelenke 14 festgelegten Kippachse auf Gleitführungen 17 auf, die bogenförmig um die Kante des Fahrzeugdaches 5 herumlaufen und an den Führungen 7, 7' und/oder den Stützen 3 befestigt sind. Diese Gleitführungen 17 können mit einem reibungsvermindernden Kunststoff beschichtet sein. In entsprechender Weise können auch die auf den Gleitführungen 17 aufliegenden Teile des Lasttrageteiles, im dargestellten Beispiel die Trägerholme 15, 15', auf ihrer Auflagefläche beschichtet sein.

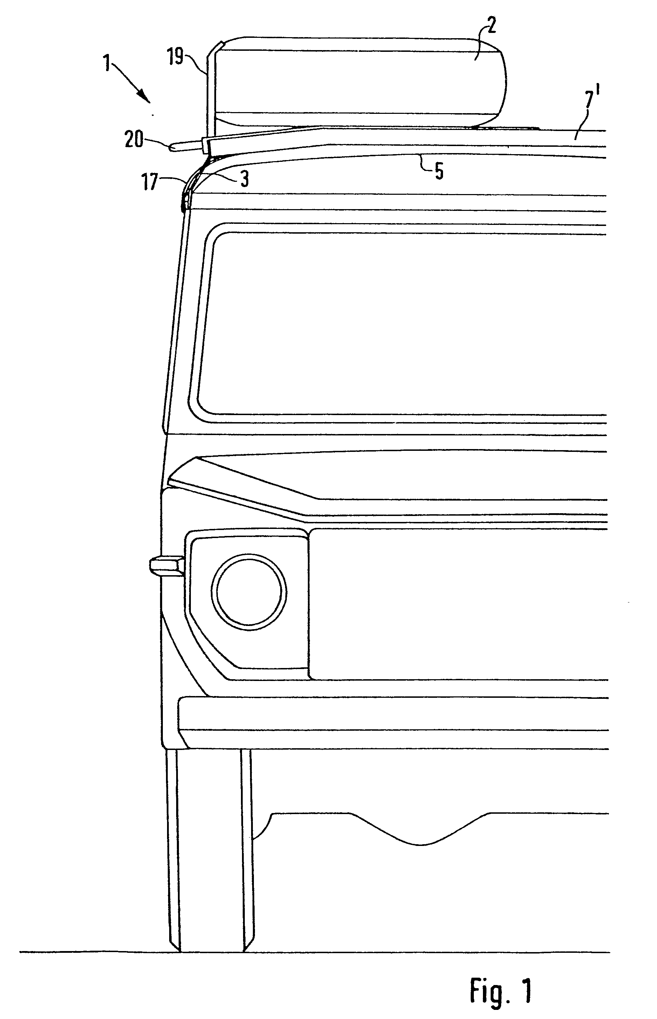

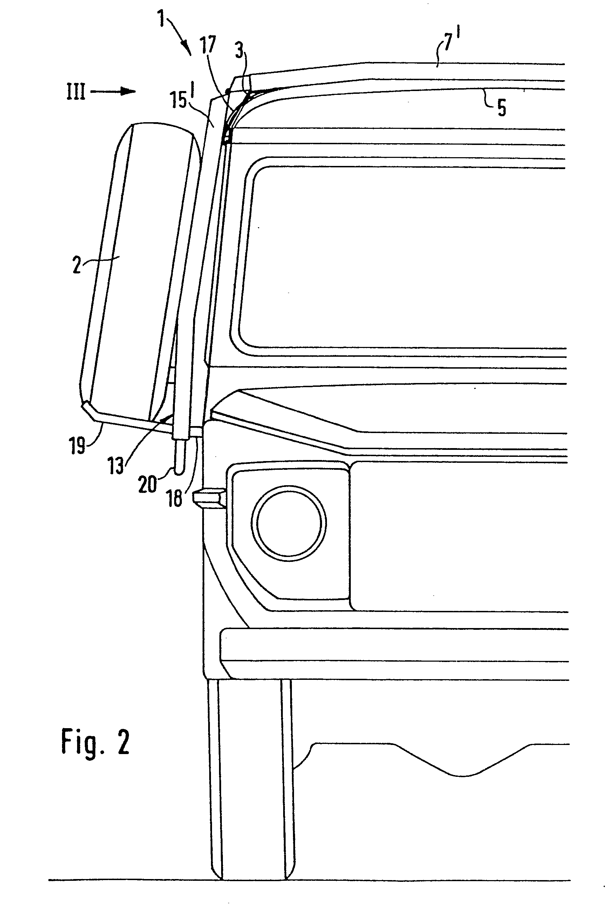

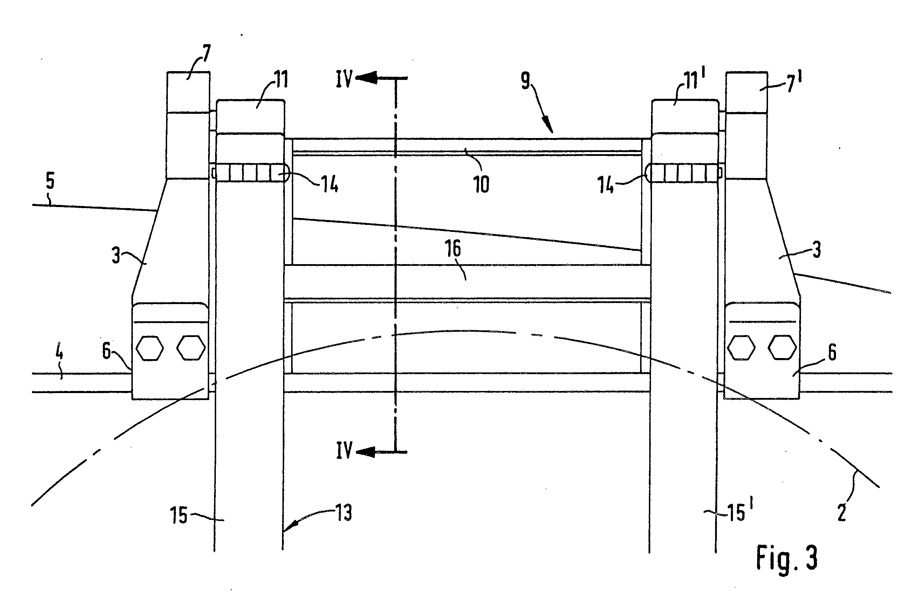

Das Lasttrageteil 13 läßt sich von einer in den Fig. 2 bis 4 dargestellten Beladestellung, bei der das Lasttrageteil 13 seitlich am Fahrzeug bis an dessen Seitenwand herabgeschwenkt ist, in eine Transportstellung bringen, wie sie in Fig. 1 dargestellt ist. Dazu wird das Lasttrageteil 13 leicht angehoben und, unter gleichzeitigem Seitwärtsschieben des Schlittens 9, auf den Gleitführungen 17 über das Fahrzeugdach 5 geschoben.

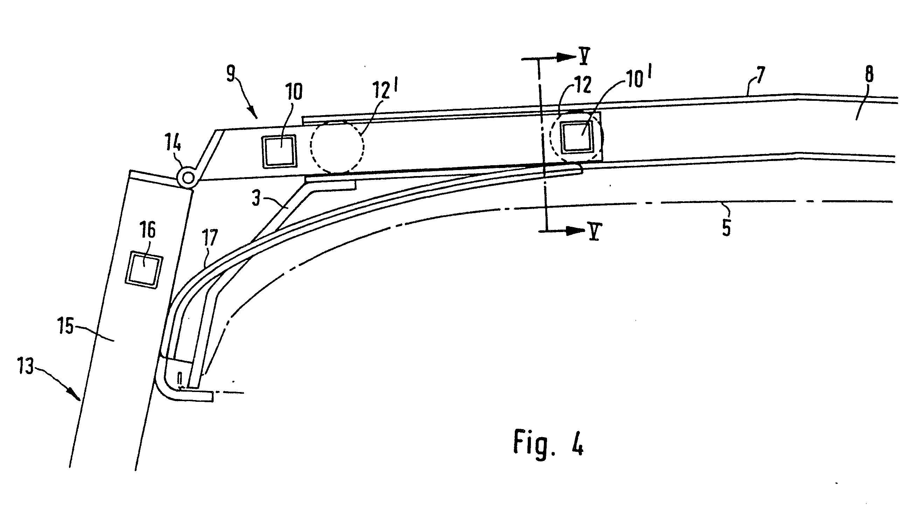

Um das Lasttrageteil 13 leichter über das Fahrzeugdach 5 schieben zu können, können nicht dargestellte Rückzugfedern vorgesehen sein, die zwischen dem Schlitten 9 und dem Rahmen des Gepäckträgers 1 eingespannt sind und den Schlitten 9 in Fig. 4 nach rechts ziehen.

In der Beladestellung liegt das Lasttrageteil 13 einerseits an den Gleitführungen 17 an, andererseits hängt es in den Gelenken 14 am Schlitten 9, den es seitwärts aus den Führungen 7, 7' herauszuziehen sucht, so daß die vorderen Führungsrollen 12' gegen die an den Stirnseiten der Führungen 7, 7' angeordneten Anschläge stoßen. Damit nimmt das Lasttrageteil 13 eine stabile Lage ein. Um ein Federn des Lasttrageteils 13 aufgrund der Elastizität der Stützen 3 bei starker Belastung zu vermeiden, kann am in der Transportstellung unteren Ende des Lasttrageteiles 13 ein Puffer 18 angeordnet sein, beispielsweise aus Gummi od. dgl., welcher das Lasttrageteil 13 in der Beladestellung gegen die Seitenwand des Fahrzeuges abstützt.

Zur Erleichterung des Beladens sind am in Beladestellung unteren Rand des Lasttrageteils 13 Aufsetzstützen 19 angeordnet, die die Last, im dargestellten Falle das Reserverad 2, abstützen, wenn die Last bzw. das Reserverad, vom Lasttrageteil gelöst bzw. auf das Lasttrageteil aufgesetzt wird, und deren Enden gegebenenfalls die Puffer 18 bilden können.

Außerdem kann am in Beladestellung unteren Rand des Lasttrageteils 13 ein Griff 20 angeordnet sein, welcher auch in Transportstellung des Lasttrageteils 13 etwas über die Dachkante des Fahrzeugdaches 5 hervorragt, so daß das Lasttrageteil 13 vom Benutzer während der Verschiebung und Schwenkung von der Transport- in die Beladestellung und umgekehrt gut gehalten werden kann.

In der Transportstellung ruht das Lasttrageteil einerseits auf den Gleitführungen 17 oberhalb des Daches 5, andererseits in den Gelenken 14 am Schlitten 9. Eine nicht dargestellte Verriegelung verriegelt dabei den Schlitten 9 und/oder das Lasttrageteil 13 mit Rahmenteilen, beispielsweise den Führungen 7, 7', des Dachgepäckträgers 1.

## Patentansprüche

1. Dachgepäckträger mit einem auf einem Fahrzeug (5) befestigbaren Rahmen (3, 7, 7') und daran gehaltertem, an einer Rahmenseite aus einer Transportstellung (Fig. 1) in eine Beladestellung (Fig. 2) herabschwenkbarem Lasttrageteil (13), welches seitlich seines Schwerpunktes mittels bezüglich des Lasttrageteiles (13) ortsfester Gelenke (14) mit parallel zur genannten Rahmenseite verlaufender Kippachse an einem am Rahmen (3, 7, 7') quer zur Kippachse verschiebbar angeordneten Führungsteil angelenkt ist, dadurch gekennzeichnet, daß Träger des Rahmens (3, 7, 7') als Führungen (7, 7') für einen als Führungsteil angeordneten Schlitten (9) ausgebildet sind, und daß das Lasttrageteil (13) auf der Seite seines Schwerpunktes auf mindestens einer rahmenfesten Gleitführung (17) abgestützt ist, die in Verschieberichtung des Lasttrageteils (13) um die Fahrzeugdachkante, zumindest teilweise, herumgeführt ist, so daß das Lasttrageteil (13) bei Verschiebung um seine Kippachse schwenkt.

2. Dachgepäckträger nach Anspruch 1, dadurch gekennzeichnet, daß am Lasttrageteil (13) eine Radhalterung zur Aufnahme eines Reserverades (2) od. dgl. angeordnet ist.

3. Dachgepäckträger nach Anspruch 2, gekennzeichnet durch eine Anordnung auf einem geländegängigen Krankenfahrzeug.

4. Dachgepäckträger nach einem der Ansprüche 1 bis 3, dadurch gekennzeichnet, daß das Lasttrageteil (13) gegen Rückzugfedern herabschwenkbar ist, welche zwischen dem Schlitten (9) und dem Rahmen (3, 7, 7') eingespannt sind.

5. Dachgepäckträger nach einem der Ansprüche 1 bis 4, dadurch gekennzeichnet, daß am in Beladestellung unteren Rand des Lasttrageteiles (13) Aufsetzstützen (19) angeordnet sind, die die Last bei herabgeschwenktem Lasttrageteil (13) abstützen.

6. Dachgepäckträger nach einem der Ansprüche 1 bis 5, dadurch gekennzeichnet, daß als Führungen (7, 7') U-förmige Profilteile mit U-förmiger Nut (8) angeordnet sind, in die am Schlitten (9) angeordnete Führungselemente bzw. -rollen (12, 12') eingreifen.

7. Dachgepäckträger nach einem der Ansprüche 1 bis 6, dadurch gekennzeichnet, daß der Schlitten (9) zwischen an den Führungen (7, 7') angeordneten Anschlägen verschiebbar ist.

## Claims

1. A roof rack having a frame (3, 7, 7') securable to a vehicle (5) and a load carrying part mounted on the frame and downwardly pivotable at one side of the frame from a transport position (Fig. 1) into a loading position (Fig. 2), the load carrying part (13) being hinged laterally of its centre of gravity to a guide part by means of hinges (14) fixed relative to the load carrying part (13) and having a hinge axis extending parallel to the said side of the frame, with the guide part being arranged at the frame (3, 7, 7') for displacement transverse to the hinge axis, characterised in that carriers of the frame (3, 7, 7') are constructed as guides (7, 7') for a sliding carriage (9) arranged as the guide part, and in that the load carrying part (13) is supported to the side of its centre of gravity on at least one guide member (17) fixed to the frame, with said guide member passing at least partially around the edge of the vehicle roof in the direction of displacement of the load carrying part (13) so that the load carrying part pivots about its hinge axis during displacement.

2. A roof rack in accordance with claim 1 and characterised in that a wheel mount for accommodating a spare wheel (2) or the like is arranged at the load carrying part (13).

3. A roof rack in accordance with claim 2 and characterised by its arrangement on a cross country ambulance.

4. A roof rack in accordance with one of the claims 1 to 3 and characterised in that the load carrying part (13) can de downwardly pivoted against return springs which are tensioned between the carriage (9) and the frame (3, 7, 7').

5. A roof rack in accordance with one of the claims 1 to 4 and characterised in that support members (19) are arranged at the, in the loading position, lower edge of the load carrying part (13) to support the load when the load carrying part (13) is in the downwardly pivoted position.

6. A roof rack in accordance with one of the claims 1 to 5 and characterised in that U-shaped sections having a U-shaped groove (8) are arraged as guides (7, 7') in which guide elements or rollers (12, 12') arranged on the carriage (9) engage.

7. A roof rack in accordance with one of the claims 1 to 6 and characterised in that the carriage (9) is displaceable between stops arranged at the guides (7, 7').

## Revendications

1. Galerie de toit comportant un châssis (3, 7, 7') pouvant être fixé sur un véhicule (5) et une partie porteuse de charge (13) montée sur un côté du châssis de façon à pouvoir pivoter vers le bas d'une position de transport (Fig. 1) dans une position de chargement (Fig. 2) et qui est articulée, latéralement par rapport à son centre de gravité à l'aide d'articulations fixes (14) par rapport à la partie porteuse de charge (13) et pourvues d'un axe de basculement orienté parallèment au côté précité du châssis, sur une partie de guidage disposée sur le châssis (3, 7, 7') et pouvant se déplacer par translation perpendiculairement à l'axe de basculement, caractérisée en ce que des supports de châssis (3, 7, 7') sont agencés sous forme de guides (7, 7') pour un chariot (9) agencé comme partie de guidage et en ce que la partie porteuse de charge (13) est soutenue, du côté de son centre de gravité, sur au moins une glissière (17) solidaire du châssis et qui entoure, au moins partiellement, dans la direction de translation de la partie porteuse de charge (13), le bord du toit de véhicule de manière que la partie porteuse de charge (13) pivote autour de son axe de basculement lors de la translation.

2. Galerie de toit selon la revendication 1, caractérisée en ce qu'il est prévu sur la partie porteuse de charge (13) un support de roue servant à recevoir une roue de secours (2) ou analogue.

3. Galerie de toit selon la revendication 2, caractérisée par une disposition sur une ambulance tous terrains.

4. Galerie de toit selon l'une des revendications 1 à 3, caractérisée en ce que la partie porteuse de charge (13) peut pivoter vers le bas en opposition à des ressorts de rappel qui sont tendus entre le chariot (9) et le châssis (3, 7, 7').

5. Galerie de toit selon l'une des revendications 1 à 4, caractérisée en ce qu'il est prévu sur un bord inférieur, dans la position de chargement, de la partie porteuse de charge (13) des supports d'appui (19) qui soutiennent la charge lorsque la partie porteuse de charge (13) a pivoté vers le bas.

6. Galerie de toit selon l'une des revendications 1 à 5, caractérisée en ce qu'il est prévu comme guides (7, 7') des parties profilées en forme de U comportant une rainure en forme de U (8) dans laquelle s'accrochent des éléments ou galets de guidage (12, 12') disposés sur le chariot (9).

7. Galerie de toit selon l'une des revendications 1à 6, caractérisée en ce que le chariot (9) peut se déplacer par translation entre des butées disposées sur les guides (7, 7').

Fig. 1

0 027 531

Fig. 2

9

Fig. 3

Fig. 4

0 027 531

0 027 531

12    11'    10'    11'

7                                            12'

8                                            7'

8

Fig. 5